# DEMANDE DE BREVET EUROPEEN

(11) **EP 0 949 133 A2**
(43) Date de publication de la demande: **13.10.1999**
(21) Numéro de dépôt: 99480018.3
(22) Date de dépôt: 31.03.1999
(51) Int. Cl.: B60T 8/54, B62L 1/00

(54) **Dispositif de frein antiblocage de roue pour vélo (ABS)**

(30) Priorité: 09.04.1998 FR 9804435
(71) Demandeur: Etelközi, Emil, 06610 La Gaude (FR)
(72) Inventeur: Etelközi, Emil, 06610 La Gaude (FR)

(57) **Abrégé**

L'invention concerne une dispositif permettant de freiner un vélo avec une mâchoire de freinage à mouvement alternatif à course variable.

Il est constitué par une deuxième mâchoire semblable à celle du freinage. Mais au lieu de garnitures de frein, elle est équipée d'une rotule, solidaire avec son excentrique.

Une action modéré sur la frein à main serre la mâchoire ( 11 ), presse la rotule ( 1 ) contre la jante ( 12 ). De ce fait, la rotule ( 1 ) évolue d'un mouvement rotatif avec son axe ( 3 ), par lequel elle est montée sur la mâchoire. L'excentrique ( 2 ) actionne la biellette ( 4 ) laquelle est montée également sur la mâchoire ( 11 ) avec son axe ( 5 ), et transforme le mouvement rotatif en mouvement alternatif.

La biellette ( 4 ) comporte une fente ( 6 ), dans laquelle coulisse le curseur ( 7 ). Le déplacement du curseur ( 7 ) dans la fente ( 6 ) de la biellette ( 4 ) est actionné par le frein à main. La mâchoire de freinage est actionnée par le câble de freinage ( 10 ), monté sur le curseur ( 7 ). L'amplitude de la course de ce curseur ( 7 ), donc la puissance du freinage, est déterminée par sa position dans la fente ( 6 ) de la biellette ( 4 ).

## Description

La présente invention concerne un dispositif de frein antiblocage pour vélo (ABS ), dont la fréquence du mouvement alternatif de ce freinage est assurée par une rotule avec son excentrique solidaire, et une biellette. La rotule, actionnée par le frein à main, est appliquée contre la jante de la roue, évolue d'un mouvement rotatif. L'excentrique actionne la biellette, laquelle transforme le mouvement rotatif en un mouvement alternatif. Dans la fente de cette biellette coulisse un curseur, actionné également par le frein à main. Sur ce curseur est monté le câble de commande de la mâchoire à frein. L'amplitude de la course de ce curseur, donc celle de la mâchoire de freinage, dépend de sa position dans la fente de la biellette. Elle est réglable progressivement par le frein à main entre un minimum et un maximum.

Le freinage d'un vélo traditionnel est assuré par la chaîne frein à main, câble de freinage et mâchoire de frein. Cette dernière presse les garnitures de frein contre la jante de la roue du vélo. Une sollicitation brusque du frein à main peut provoquer le blocage des roues, dangereux sur chaussée glissante, ou en descente. Un freinage intermittent à une fréquence souhaitable avec ce système n'est pas possible.

Le dispositif selon l'invention permet de pallier à cet inconvénient. Il comporte en effet une première caractéristique représentée par une deuxième mâchoire en plus de celle de freinage. Mais au lieu des garnitures de frein, elle est équipée d'une rotule solidaire avec son excentrique, et montée sur la mâchoire par l'intermédiaire de son axe, avec lequel elle peut évoluer d'un mouvement rotatif. Une biellette, montée également sur la mâchoire avec son axe, et en contact avec l'excentrique, transforme le mouvement circulaire en mouvement alternatif.

Les dessins annexés illustrent l'invention :

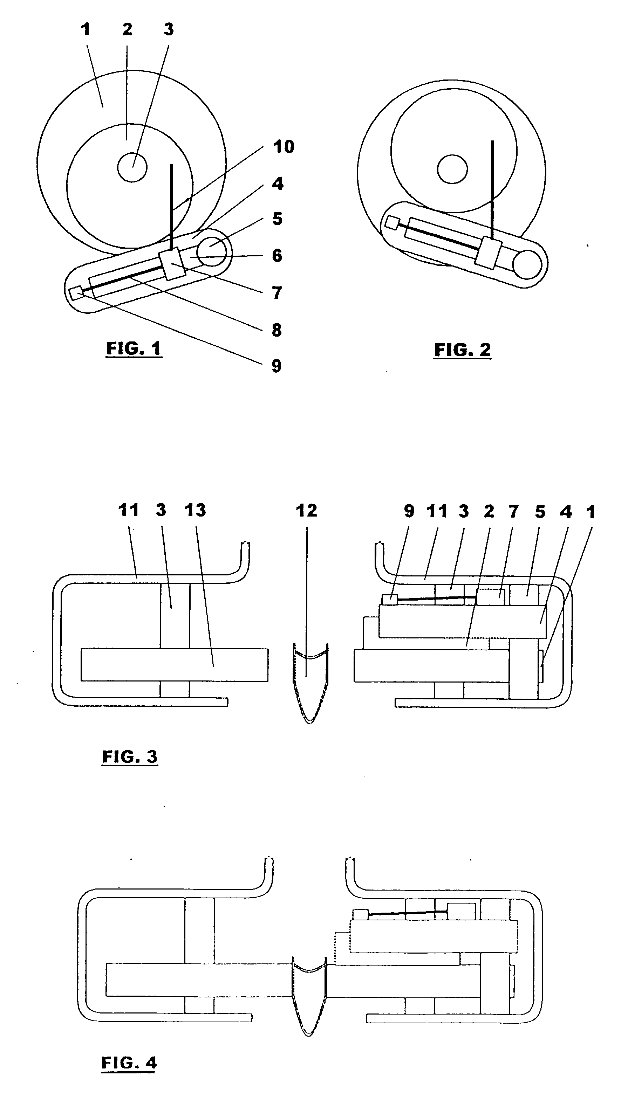

La figure 1 représente cette rotule ( 1 ), vu de haut, avec son excentrique solidaire ( 2 ) et axe ( 3 ), par lequel elle est montée sur la mâchoire. Une biellette ( 4 ) _{,} avec son axe, ( 5 ) est également montée sur la mâchoire. En contact avec l'excentrique ( 2 ), la biellette ( 4 ) transforme le mouvement rotatif en un mouvement alternatif. Sur la biellette ( 4 ) est ménagé une fente ( 6 ), dans laquelle peut coulisser le curseur ( 7 ). La position de ce curseur ( 7 ) dans la fente ( 6 ) de la biellette ( 4 ) est déterminée avec le frein à main par l'intermédiaire du câble de commande ( 8 ), dont le bout de la gaine ( 9 ) est fixé sur l'extrémité de la biellette ( 4 ). Sur ce curseur est monté également le câble ( 10 ) lequel actionne à son tour la mâchoire de freinage. La position de ce curseur ( 7 ) dans la fente ( 6 ) détermine l'amplitude de sa course alternative, et celle de la mâchoire de freinage. La biellette ( 4 ) est au point mort bas.

La figure 2 représente les mêmes pièces, avec la biellette au point mort haut.

La figure 3 représente la mâchoire à rotule ( 11 ) vu de côté, non sollicitée, hors d'action.

La figure 4 représente cette mâchoire (11) vu de côté, activé par une action modérée sur le frein à main. La mâchoire (11) est serrée, la rotule ( 1 ) est en contact avec la jante, en coupe, ( 12 ) de la roue. La rotule ( 1 ) évolue d'un mouvement rotatif avec son axe ( 3 ) et avec son excentrique ( 2 ). La biellette ( 4 ). pivotant avec son axe ( 5 ), actionnée par l'excentrique ( 2 ), transforme le mouvement rotatif en un mouvement alternatif.

Une deuxième caractéristique de cette invention est le curseur ( 7 ). En position d'attente, il est rappelé vers l'axe de la biellette ( 4 ) par son ressort, non illustré. Le curseur ( 7 ) est actionné progressivement par le frein à main par l'intermédiaire du câble de commande ( 8 ) depuis sa position près du centre de la biellette ( 4 ), ou la course est au minimum, vers l'extrémité de cette biellette ( 4 ), ou l'amplitude de la course du curseur ( 7 ) et de la mâchoire de freinage sont au maximum. La position du curseur ( 7 ), dans la fente ( 6 ) de la biellette ( 4 ) détermine l'amplitude de la course du curseur ( 7 ). La course alternative est transmise à la mâchoire de freinage par le câble de commande ( 10 ), dont la gaine est fixée sur la mâchoire à rotule ( 11 ). La biellette ( 4 ) est rappelé vers le point mort haut par son ressort, non illustré. Le câble de commande de curseur ( 8 ) est une dérivation sur le câble de commande, non illustrée, de la mâchoire à rotule ( 11 ). Ainsi, avec le frein à main sont actionnés la mâchoire à rotule ( 11 ) et le curseur ( 7 ).

Une seule rotule assure la chaîne actionnant le freinage. Du côté opposé de la mâchoire, seule une rotule, sans excentrique, assure l'équilibrage de la pression sur la jante.

La fréquence de mouvement des freins est déterminée par le rapport diamètre de la jante ( 12 ) divisé par le diamètre de la rotule ( 1 ). L'amplitude de la course des freins, donc la force de freinage, est déterminé par la position du curseur ( 7 ) dans la fente ( 6 ) de la biellette ( 4 ). L'excentrique, ( 2 ) ou une came avec une forme appropriée, non illustrée, détermine le profil de chaque cycle de freinage. L'énergie du freinage est puisée dans l'énergie cinétique de vélo et de son chargement.
Le dispositif selon l'invention est pariculièrement destiné aux vélos de course.

## Revendications

1. Dispositif de frein antiblocage pour vélo ( ABS) caractérisé en ce qu'il comporte une mâchoire à rotule ( 11 ) distincte de celle du freinage. Mais au lieu de garnitures de frein, elle comporte une rotule ( 1 ) solidaire avec son excentrique ( 2 ), ou une came d'une forme appropriée, non illustrée. La rotule est montée sur la mâchoire à rotule ( 11) avec son axe ( 3 ), avec lequel elle peut évoluer d'un mouvement rotatif.

2. Dispositif selon la revendication 1 caractérisé en ce que la rotule ( 1 ), commandée par le frein à main par l'intermédiaire du câble de commande de la mâchoire à rotule, non illustrés, serre la rotule ( 1 ) contre la jante de la roue ( 12 ). Par ce contacte, la rotule ( 1 ) et son excentrique ( 2 ), évoluent d'un mouvement rotatif avec leur axe ( 3 )_{,} mues par l'énergie cinétique du vélo. Une seule rotule ( 1 ) est équipée avec une excentrique ( 2 ). Du côté opposé de la mâchoire, une rotule ( 13 ) seule assure l'équilibrage de la pression sur la jante.

3. Dispositif selon la revendication 2, que le biellette ( 4 ), montée également avec son axe ( 5 ) sur la mâchoire ( 11 ), est en contact avec l'excentrique ( 2 ). La biellette ( 4 ) pivote avec cet axe ( 5 ), et transforme le mouvement rotatif en mouvement alternatif. La biellette ( 4 ) est rappelée vers l'excentrique ( 2 ) par un ressort, non illustré.

4. Dispositif selon la revendication 3 caractérisé en ce que dans la biellette ( 4 ) est aménagé une fente ( 6 ), dans laquelle le curseur ( 7 ) peut coulisser. Ce curseur ( 7 ), est commandé par le frein à main par l'intermédiaire du câble ( 8 ), lequel est une dérivation sur le câble de commande de la mâchoire à rotule, non illustré. Le curseur ( 7 ) est rappelé par son ressort, non illustré, vers l'axe ( 5 ) de la biellette ( 4 ).

5. Dispositif selon l'une quelconque des revendications précédentes caractérisé en ce que le déplacement du curseur ( 7 ) dans la fente ( 6 ) de la biellette ( 4 ) modifie l'amplitude de la course alternative de ce curseur ( 7 ).

6. Dispositif selon l'une quelconque des revendications, en ce que sur le curseur ( 7 ) est monté le câble de freinage ( 10 ), lequel actionne la mâchoire de freinage, non illustrée. De ce fait l'amplitude de la course alternative du curseur ( 7 ) est transmise à la mâchoire du freinage et aux garnitures de frein, non illustrées.
